# EUROPÄISCHE PATENTSCHRIFT

(11) **EP 1 449 386 B1**
(45) Veröffentlichungstag und Bekanntmachung des Hinweises auf die Patenterteilung: **09.04.2008**
(21) Anmeldenummer: 02779209.2
(22) Anmeldetag: 13.11.2002
(51) Int. Cl.: H04Q 3/00, H04L 29/06

(54) **VERFAHREN ZUM AUSTAUSCHEN VON NACH UNTERSCHIEDLICHEN CODIERUNGSGESETZEN ERZEUGTEN NUTZINFORMATIONEN ZWISCHEN WENIGSTENS 2 TEILNEHMERENDEINRICHTUNGEN**
PROCEDURE FOR EXCHANGING USEFUL INFORMATION GENERATED ACCORDING TO DIFFERENT CODING LAWS BETWEEN AT LEAST 2 PIECES OF USER TERMINAL EQUIPMENT
PROCEDE D'ECHANGE D'INFORMATIONS UTILES GENEREES SELON DIFFERENTES LOIS DE CODAGE ENTRE AU MOINS DEUX TERMINAUX D'ABONNE

(30) Priorität: 27.11.2001 DE 10158059
(43) Veröffentlichungstag der Anmeldung: 25.08.2004
(73) Patentinhaber: Nokia Siemens Networks GmbH & Co. KG, 81541 München (DE)
(72) Erfinder: HOFFMANN, Klaus, 81735 München (DE); SABROWSKI, Sven, 81476 München (DE); STUPKA, Jean, Marie, 82110 Germering (DE)
(86) Internationale Anmeldenummer: PCT/DE2002/004200
(87) Internationale Veröffentlichungsnummer: WO 2003/049456

(56) Entgegenhaltungen:
- WO-A-00/70885
- WO-A-01/89261
- WO-A-02/065787
- DE-A- 10 106 583
- "SIGNALLING SYSTEM NO.7 - APPLICATION TRANSPORT MECHANISM: BEARER INDEPENDENT CALL CONTROL (BICC)" ITU-T RECOMMENDATION Q765.5, XX, XX, Juni 2000 (2000-06), Seiten 1-21, XP002192024

## Beschreibung

Die Erfindung betrifft ein Verfahren gemäß dem Oberbegriff von Patentanspruch 1.

Aus WO 02/065787 A ist ein Verfahren bekannt, bei dem die Transcodierung zwischen unterschiedlichen Codierungen immer im Zielnetz durchgeführt wird.
Aus WO 00/70885 A ist ein Verfahren zur Verhandlung von Rufeigenschaften zwischen Signalisierungspunkten in einem Telekommunikationsnetz bekannt, bei dem bevorzugte Rufeigenschaften beim Verbindungsaufbau signalisiert werden.

Neuere Kommunikationsarchitekturen sehen die Trennung vermittlungstechnischer Netzwerke in verbindungsdienstbezogene Einheiten (Call Feature Server) und den Transport der Nutzinformationen (Bearer Control) vor. Die Übertragung der Nutzinformationen kann dabei über unterschiedliche hochbitratige Transporttechnologien wie z. B. ATM, IP oder Frame Relay vorgenommen werden.

Mit einer derartigen Trennung sind die gegenwärtig in Schmalbandnetzen geführten Telekommunikationsdienste auch in Breitbandnetzen zu realisieren. Dabei werden die Teilnehmer entweder direkt (z.B. über ein DSS1-Protokoll) oder über als Call Feature Server (CFS) ausgebildete Vermittlungsstellen (z.B. über das ISUP-Protokoll) angeschlossen. Die Nutzinformationen werden über Media Gateways (MG) in die jeweils benutzte Transporttechnologie umgewandelt.

Die Steuerung der Media Gateways werden von jeweils zugeordneten Media Gateway Controllern durchgeführt, die als Call Feature Server ausgebildet sein können. Zur Steuerung der Media Gateways verwenden die Call Feature Server normierte Protokolle, wie z. B. das MGCP Protokoll oder das H.248 Protokoll. Zur Kommunikation untereinander verwenden die Call Feature Server ein standardisiertes BICC (Bearer Independent Call Control) Protokoll, das die Weiterbildung eines ISUP Protokolls darstellt.

In dem BICC Protokoll wird das Q.765.5 BAT (bearer application transport) ITU-T Standard Protokoll verwendet,

In dem BICC Protokoll wird das Q.765.5 BAT (bearer application transport) ITU-T Standard Protokoll verwendet, welches auch für IP bearer RTP als Bearer Technologie beschreibt. Mit Hilfe dieses Protokolles werden Ressourcenprobleme im Netz behandelt, die mit Hilfe von Datenkomprimierung gelöst werden. Hierzu ist eine CODEC Negotiation Procedure vorgesehen, die Teil des Q.765.5 BAT Protokolls ist.

Eine Anleitung, wie dieses Protokoll zu benutzen ist, gibt ein weiteres BICC Protokoll, das Q.1902.x BICC CS2 Protokoll (bearer independent call control capability set 2, mit einem eigenen Service Indicator beim MTP (message transfer part)), das als ITU-T Standard in Bearbeitung ist.

Mit Hilfe dieses Protokoll werden z. B. die zwischen 2 PSTN Netzen bislang übertragenen Nutzinformationen über ein IP Netz geführt. Hierbei wird für die Übertragung durch das IP Netz eine Trennung zwischen Signalisierungsinformation und Nutzinformation vollzogen. Problematisch ist nun der Umstand, daß der Q.1902.x BICC CS2 ITU-T Standard nicht das Problem berücksichtigt, wenn der Teilnehmer eines A-Law Landes eine Verbindung zu einem in einem µ-Law Land angeordneten Teilnehmer aufzubauen wünscht. Da in diesem Fall die zwischen beiden Teilnehmern ausgetauschten Informationen nach unterschiedlichen Codierungsgesetzen erzeugt werden, besteht die Gefahr einer Verfälschung der Nutzinformationen. Insbesondere bei grenzüberschreitendem Telefon (z. B. Europa (A-Law) - USA (µ-Law)) kommt diese Problematik zum Tragen .

Dies gilt insbesondere auch für 64 kBit/s unrestricted preferred Verbindungen im Fallback-Fall. Grundsätzlich wird bei 64 kBit/s Verbindungen die Codierung/ Decodierung im Endgerät durchgeführt.Die mittels dieser Verbindung übertragenen Nutzinformationen werden transparent durch das Netz durchgereicht. Bei einer 64 kBit/s unrestricted preferred Verbindung ist der rufende A-Teilnehmer bereit, im Falle des Nichtzustandekommens der Verbindung eine Verbindung mit niedriger Bandbreite zu akzeptieren. Dies kann eine normale Sprachverbindung (Speech) oder eine 3,1 kHz Verbindung sein.

Bei den bislang verwendeten analogen Verbindungen bestand diese Problematik nicht.

Der Erfindung liegt die Aufgabe zugrunde, einen Weg aufzuzeigen, wie Nutzinformationen, die nach unterschiedlichen Codierungsgesetzen erzeugt werden, paketorientiert ausgetauscht werden können.

Die Erfindung wird ausgehend von dem im Oberbegriff von Patentanspruch 1 angegebenen Merkmalen durch die kennzeichnenden Merkmale gelöst.

Vorteilhaft an der Erfindung ist, daß eine effiziente Codierung/ Decodierung beim Übergang von µ- nach A-Law durchgeführt wird, indem die im Q.765.5 BAT Protokoll bereits vorhandene CODEC Negotiation Procedure um eine zusätzliche Logik erweitert wird.Diese sorgt für die korrekte Auswahl des Codierungsverfahrens. Mit dieser zusätzlichen Logik für die richtige Auswahl der Codecs wird ein Übergang zwischen A- und µ-law Codierung erst ermöglicht. Die zusätzliche Logik überträgt die in der 'TDM-Welt' festgelegte Transcodierungsregel für VoIP-Verbindungen.

Vorteilhaft an der Erfindung ist weiterhin, daß eine effiziente Codierung/ Decodierung auch für Fallback-Verbindungen beim Übergang von µ- nach A-Law durchgeführt wird, indem die im Q.765.5 BAT Protokoll bereits vorhandene CODEC Modification Procedure um eine weitere Logik erweitert wird.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: eine Netzkonfiguration, in der das erfindungsgemäße Verfahren implementiert wird,
- Fig 2: den erfindungsgemäßen Algorithmus für Sprachverbindungen
- Fig 3: den erfindungsgemäßen Algorithmus für 64kBit/s unrestricted preferred Verbindungen

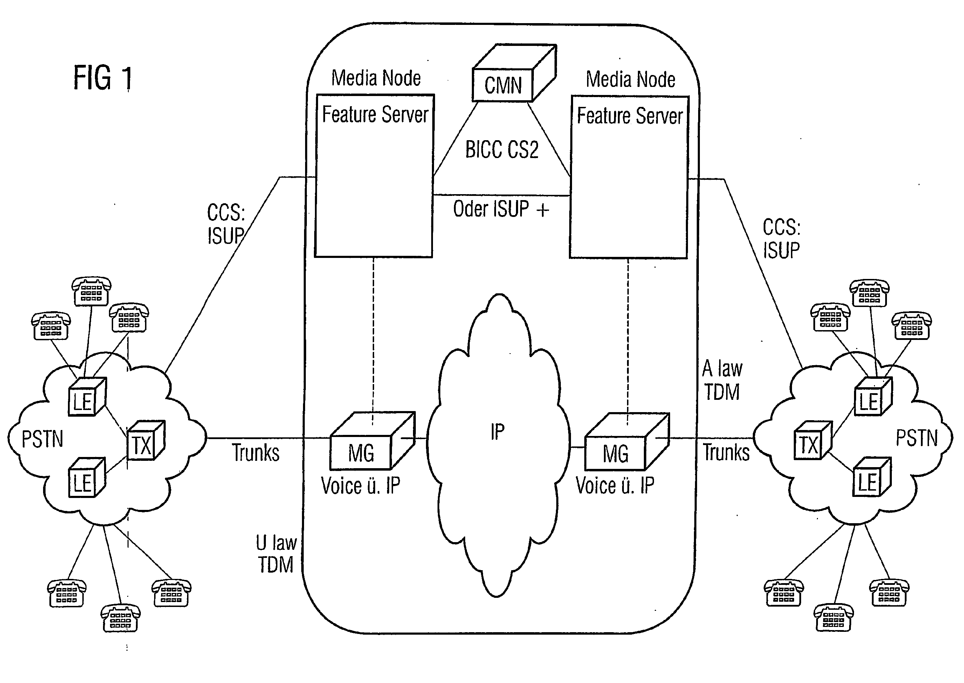

In Fig. 1 ist eine Netzkonfiguration aufgezeigt, auf der das erfindungsgemäße Verfahren zum Ablauf gelangt. Demgemäß sind beispielhaft 2 PSTN Netze aufgezeigt, in denen jeweils eine Mehrzahl von Teilnehmern in bekannter Weise angeordnet sind. Diese sind an Ortsvermittlungsstellen LE herangeführt, die ihrerseits mit Transit-Vermittlungsstellen TX verbunden sind.

In den Transit-Vermittlungsstellen TX wird nun die Trennung zwischen Signalisierungsinformationen und Nutzinformationen durchgeführt. Die Signalisierungsinformationen werden von der Transit-Vermittlungsstelle TX unmittelbar (ISUP Protokoll) einem Media Gateway Controller CFS zugeführt. Die Nutzinformationen werden einem (eingangsseitig angeordneten) Media Gateway MG A zugeführt, das als Schnittstelle zwischen dem TDM Netz und einem Übertragungsnetz IP fungiert. Die Nutzinformationen werden über das Übertragungsnetz IP paketorientiert übertragen. Das Media Gateway MG A wird von dem Media Gateway Controller CFS A gesteuert, der als Call Feature Server ausgebildet ist.

Die Nutzinformationen werden vom Media Gateway MG A zu einemweiteren (ausgangsseitig angeordneten) Media Gateway MG B über das Übertragungsnetz IP geroutet. Dort werden die Nutzinformationen wieder unter Steuerung des dem ausgangsseitig angeordneten Media Gateways MG B zugeordneten Call Feature Server CFS B in einen TDM Datenstrom umgewandelt und dem in Frage kommenden Teilnehmer zugeführt.

Die zwischen einem Call Feature Server und dem jeweils zugeordneten Media Gateway übertragenen Daten werden von einem standardisierten Protokoll unterstützt. Dieses kann beispielsweise das MGCP oder das H.248 Protokoll sein. Zwischen den beiden Media Gateway Controllern CFS ist als weiteres standardisiertes Protokoll das Q.765.5 BAT Protokoll vorgesehen.

In diesem Protokoll ist eine CODEC Negotiation Procedure angeordnet. Sollen die über das Übertragungsnetz IP geführten Nutzinformationen komprimiert werden, teilt einer der Media Gateway Controller z.B. der CSF A dem weiteren Media Gateway Controller z.B. der CSF B mit, welche Komprimierverfahren er unterstützt. Der Media Gateway Controller MGC B teilt seinerseits dem MGC A mit, welche Komprimieralgorithmen er beherrscht und wählt eines der vom MGC A angebotenen Komrimierverfahren aus. Das Komprimierverfahren wird somit von beiden ausgehandelt. Jeder der Media Gateway Controller MGC A, MGC B steuert nun die ihm jeweils zugeordneten Media Gateways MG A bzw. MG B an. Der im Media Gateway MG A ankommende Datenstrom wird nun entsprechend dem ausgewählten Komprimierverfahren komprimiert und über das Übertragungsnetz IP dem Media Gateway MG B zugeführt, dort dekomprimiert und in einen TDM Datenstrom gewandelt. Eine Anleitung, wie dieses Protokoll zu verwenden ist, ist im Q.1902.x BICC CS2 ITU-T Standard beschrieben.

Liegt (normale Verbindung) die A-Seite in einem A-Law Netz, so bietet sie der B-Seite nur A-Law an; liegt in diesem Falle die B-Seite in einem µ-law Netz, so muss die B-Seite von A-Law auf µ-Law konvertieren. Liegt die A-Seite in einem µ-Law Netz, so bietet sie der B-Seite als Präferrenz µ-Law und als zweite Wahl A-Law an. Liegt in diesem Falle die B-Seite in einem µ-Law Netz, so bestätigt sie in der Application Transport Message APM 'µ-Law'. Liegt die B-Seite in einem A-Law Netz, so antwortet sie in der Application Transport Message APM mit 'A-law'; in diesem Falle muss die A-Seite von µ-Law auf A-Law konvertieren.

Dies ist ohne weiteres möglich, da die Media Gateways jeweils eine unmittelbare Schnittstelle zur TDM Seite haben. Damit ist die Kodierung auf der TDM Seite des Media Gateways bekannt. Wahlweise wird sie dem Media Gateway vom zugeordneten Call Feature Server MGC bekannt gemacht. Um sicherzustellen, daß die A-Law Seite (gemäß Festlegung bei ITU-T) nicht die Transkodierung durchführt, wird in der IAM eine Liste von CODECs mit mindesten dem Eintrag G.711 A-Law entsprechend der Präferrenz angeboten.

Vorzugweise setzt ein µ-Law Netz den G.711 µ-Law CODEC an die erste Stelle, gefolgt von einem G.711 A-law CODEC. Umgekehrt setzt ein A-Law Netz vorzugweise den G.711 A-law CODEC an die erste Stelle.

Die empfangende Seite kann in Ihrer Antwort (gemäß der CODEC Negotiation Procedure des BICC) basierend auf der Kenntnis, ob Sie gemäß der Transkodierungs Regel bei ITU-T eine Transkodierung vornehmen muß oder nicht, den entsprechenden Codec im gewählten (selected) Codec wieder zurücksignalisieren, damit die Transkodierungs Regel erfüllt wird.

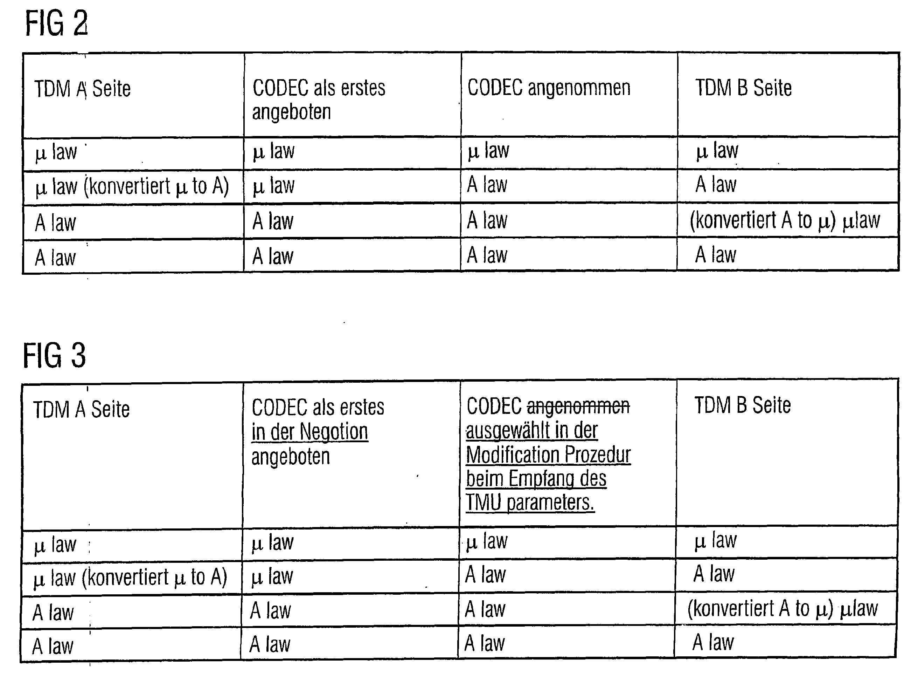

Eine auf diesen Überlegungen basierende Entscheidungstabelle ist in Fig. 2 aufgezeigt.

Mit den für die als Media Gateway Controller fungierenden Call Feature Servern CFS A, CFS B zur Verfügung stehenden Informationen können dann die beiden Media Gateways MG A, MG B über das MGCP (oder H.248) Protokoll in entsprechender Weise eingestellt werden. Um auch 64 kBit/s unrestricted preferred Verbindungen behandeln zu können, wird in der Modification Procedure des Q.765.5 BAT Protokolls eine weitere Logik vorgesehen. Eine auf diesen Überlegungen basierende Entscheidungstabelle ist in Fig. 3 aufgezeigt.

Beim Verbindungsaufbau der 64 kBit/s unrestricted preferred Verbindung wird die Negotation Procedure in gleicher Weise gestartet, wie bereits beschrieben. Zwar wäre dies für 64 kBit/s unrestricted preferred Verbindung nicht zwingend erforderlich, hier wird aber der Fall abgedeckt, daß die Verbindung nicht zustandekommt, weil z. B. das Endgerät des B-Teilnehmers dies nicht unterstützt. Da es sich um eine preferred Verbindung handelt, akzeptiert der A-Teilnehmer auch Verbindungen mit niedrigerer Bandbreite.

Beim Verbindungsaufbau der 64 kBit/s unrestricted preferred Verbindung ist der A-Seite weder bekannt, welcher CODEC auf der B-Seite zur Anwendung gelangt noch ob diese die 64 kBit/sec Verbindung akzeptiert. Liegt die A-Seite in einem A-Law Netz, so bietet sie der B-Seite als 1. Wahl einen transparenten CODEC und als 2. Wahl einen A-Law CODEC an. Wird die 64 kBit/s unrestricted preferred Verbindung von der B-Seite akzeptiert, wird in einer Meldung APM gemäß CODEC Negotiation der transparenten CODEC bestätigt. Liegt die A-Seite in einem A-Law Netz und die 64 kBit/s unrestricted preferred Verbindung wird von der B-Seite nicht akzeptiert, wird entweder a) mit Hilfe der CODEC Negotiation Procedur unmittelbar auf die CODEC Anforderung aufgrund der Entscheidungstabelle geantwortet, oder zu einem spätern Zeitpunkt b) die modification procedure angestoßen (Fallback). Dabei wird bei Fall b) der A-Seite in der APM Message (Application Transport Message) aufgrund von TMU = speech (oder 3,1 kHz) die Codec Modification Procedure übergeben. In der Codec modification ist die implizierte Information abgelegt, welche Seite welchen CODEC unterstützt. Unterstützt bei vorliegendem Beispiel die B-Seite A-Law, so wird dies der A-Seite mitgeteilt, die daraufhin ihren CODEC von transparent auf A-Law umschaltet. Unterstützt die B-Seite µ-Law, wird ebenfalls A-Law der A-Seite mitgeteilt, die daraufhin ihren CODEC von transparent auf A-Law umschaltet. Die B-Seite schaltet auch auf A-Law um.

Liegt die A-Seite in einem u-Law Netz, so wird als 1. Wahl der B-Seite ein transparenter CODEC, als 2. Wahl µ-Law und als 3. Wahl A-Law angeboten. Das Umschalten der CODECS bei Fallback erfolgt in entsprechender Weise wie soeben beschrieben.

Liegt die A-Seite in einem µ-Law Netz und die B-Seite in einem A-Law Netz, fordert die B-Seite dann beim Fallback den 'A-Law' CODEC an.

Liegt die A-Seite in einem A-Law Netz, wird der B-Seite als Präferenz ein transparenter CODEC und als zweite Wahl lediglich A-Law codierte Nutzinformationen angeboten, woraufhin die B-Seite den A-Law CODEC bestätigt, falls die B-Seite erkennt das der transparente CODEC nicht zur Anwendung kommt.

Liegt die A-Seite in einem µ-Law Netz und die B-Seite in einem µ-Law Netz, wird der B-Seite als Präferenz der transparente CODEC, und als zweite Wahl µ-Law und als dritte Wahl A-Law angeboten, woraufhin die B-Seite den µ-Law CODEC bestätigt, falls die B-Seite erkennt das der transparente CODEC nicht zur Anwendung kommt.

Liegt die A-Seite in einem µ-Law Netz und die B-Seite in einem A-Law Netz, wird der B-Seite als Präferenz der transparente CODEC, als zweite Wahl µ-Law und als dritte Wahl A-Law angeboten, woraufhin die B-Seite den A-Law CODEC bestätigt, falls die B-Seite erkennt das der transparente CODEC nicht zur Anwendung kommt.

## Patentansprüche

1. Verfahren zum Austauschen von nach unterschiedlichen Codierungsgesetzen erzeugten Nutzinformationen zwischen wenigstens 2 Teilnehmerendeinrichtungen, womit nach Maßgabe des ersten Codierungsgesetzes eine A-Seite und nach Maßgabe des zweiten Codierungsgesetzes eine B-Seite definiert ist, wobei die Nutzinformationen mit einer ersten Bandbreite, einer 64 kBit/s unrestricted preferred Verbindung, über eine Mehrzahl von Übertragungseinrichtungen (MG A, MG B) geführt werden, die die Funktion einer Schnittstelle zwischen einem ersten (TDM) und zweiten (ATM, IP) Übertragungsnetz aufweisen, und die von jeweils zugeordneten Steuereinrichtungen (CSF A, CSF B) gesteuert werden, die den Nutzinformationen zugeordnete Signalisierungsinformationen bearbeiten, die sie über ein, eine CODEC Negotiation und Modification Procedure aufweisendes Signalisierungsprotokoll austauschen,
**dadurch gekennzeichnet,**
**dass** in der CODEC Modification Procedure eine weitere Logik vorgesehen wird, mittels der beim Umschalten auf eine zweite Bandbreiteim Falle des Nichtzüstandekommens der Verbindung mit einer ersten Bandbreite ein Fallback auf eine Verbindung mit einer niedrigeren Bandbreite die auszutauschenden Nutzinformationen in das Codierungsgesetz der empfangenden Teilnehmerendeinrichtung umgewandelt werden.

2. Verfahren nach Anspruch 1,
**dadurch gekennzeichnet,**
**dass** falls die A-Seite in einem A-Law Netz liegt, der B-Seite als Präferenz ein transparenter CODEC und als zweite Wahl lediglich A-Law codierte Nutzinformationen angeboten werden, woraufhin die B-Seite zunächst den transparenten CODEC bestätigt.

3. Verfahren nach Anspruch 1 bis 2,
**dadurch gekennzeichnet,**
**dass** falls die A-Seite in einem A-Law Netz liegt, die B-Seite beim Fallback den A-Law CODEC anfordert.

4. Verfahren nach Anspruch 1 bis 3,
**dadurch gekennzeichnet,**
**dass** falls die A-Seite in einem µ-Law Netz und die B-Seite in einem µ-Law Netz liegt, der B-Seite als Präferenz der transparente CODEC und als zweite Wahl µ-Law und als dritte Wahl A-Law angeboten wird, woraufhin die B-Seite zuerst den transparenten CODEC bestätigt.

5. Verfahren nach Anspruch 1 bis 4,
**dadurch gekennzeichnet,**
**dass** falls die A-Seite in einem µ-Law Netz und die B-Seite in einem µ-Law Netz liegt, die B-Seite beim Fallback den 'µ-Law' CODEC anfordert.

6. Verfahren nach Anspruch 1 bis 5,
**dadurch gekennzeichnet,**
**dass** falls die A-Seite in einem µ-Law Netz und die B-Seite in einem A-Law Netz liegt der B-Seite als Präferenz der transparente CODEC, und als zweite Wahl µ-Law und als dritte Wahl A-Law angeboten wird, woraufhin die B-Seite zuerst den transparenten CODEC bestätigt.

7. Verfahren nach Anspruch 1 bis 6,
**dadurch gekennzeichnet,**
**dass** falls die A-Seite in einem µ-Law Netz und die B-Seite in einem A-Law Netz liegt die B-Seite dann beim Fallback den 'A-Law' CODEC anfordert.

8. Verfahren nach Anspruch 1,
**dadurch gekennzeichnet,**
**dass** falls die A-Seite in einem A-Law Netz liegt, der B-Seite als Präferenz ein transparenter CODEC und als zweite Wahl lediglich A-Law codierte Nutzinformationen angeboten werden, woraufhin die B-Seite den A-Law CODEC bestätigt, falls die B-Seite erkennt dass der transparente CODEC nicht zur Anwendung kommt.

9. Verfahren nach Anspruch 1,
**dadurch gekennzeichnet,**
**dass** falls die A-Seite in einem µ-Law Netz und die B-Seite in einem µ-Law Netz liegt und der B-Seite als Präferenz der transparente CODEC, und als zweite Wahl µ-Law und als dritte Wahl A-Law angeboten wird, woraufhin die B-Seite den µ-Law CODEC bestätigt, falls die B-Seite erkennt dass der transparente CODEC nicht zur Anwendung kommt.

10. Verfahren nach Anspruch 1,
**dadurch gekennzeichnet,**
**dass** falls die A-Seite in einem µ-Law Netz und die B-Seite in einem A-Law Netz liegt der B-Seite als Präferenz der transparente CODEC, und als zweite Wahl µ-Law und als dritte Wahl A-Law angeboten wird, woraufhin die B-Seite den A-Law CODEC bestätigt, falls die B-Seite erkennt dass der transparente CODEC nicht zur Anwendung kommt.

## Claims

1. Method for interchanging useful information produced according to different coding laws between at least two pieces of subscriber terminal equipment, with which an A end is defined according to the first coding law and a B end is defined according to the second coding law, where the useful information is routed using a first bandwidth, a 64-kbit/s unrestricted preferred connection, via a plurality of transmission devices (MG A, MG B) which have the function of an interface between a first (TDM) and a second (ATM, IP) transmission network and which are controlled by respective associated control devices (CSF A, CSF B) which handle signalling information which is associated with the useful information and which they interchange using a signalling protocol comprising a CODEC negotiation and modification procedure,
**characterized**
**in that** the CODEC modification procedure contains a further piece of logic which, when changing over to a second bandwidth, a fallback to a connection with a lower bandwidth uses to convert the useful information to be interchanged to the coding law of the receiving piece of subscriber terminal equipment if the connection with a first bandwidth is not set up.

2. Method according to Claim 1,
**characterized**
**in that** if the A end is situated in an A-law network then the B end is offered preferably a transparent CODEC and as second choice just A-law coded useful information, whereupon the B end first of all confirms the transparent CODEC.

3. Method according to Claims 1 and 2,
**characterized**
**in that** if the A end is situated in an A-law network, the B end requests the A-law CODEC from the fallback.

4. Method according to Claims 1 to 3,
**characterized**
**in that** if the A end is situated in a µ-law network and the B end is situated in a µ-law network, the B end is offered preferably the transparent CODEC and as second choice p law and as third choice A law, whereupon the B end first of all confirms the transparent CODEC.

5. Method according to Claims 1 to 4,
**characterized**
**in that** if the A end is situated in a µ-law network and the B end is situated in a µ-law network, the B end requests the 'µ-law' CODEC from the fallback.

6. Method according to Claims 1 to 5,
**characterized**
**in that** if the A end is situated in a µ-law network and the B end is situated in an A-law network, the B end is offered preferably the transparent CODEC and as second choice µ law and as third choice A law, whereupon the B end first of all confirms the transparent CODEC.

7. Method according to Claims 1 to 6,
**characterized**
**in that** if the A end is situated in a µ-law network and the B end is situated in an A-law network, the B end then requests the 'A-law' CODEC from the fallback.

8. Method according to Claim 1,
**characterized**
**in that** if the A end is situated in an A-law network, the B end is offered preferably a transparent CODEC and as second choice just A-law coded useful information, whereupon the B end confirms the A-law CODEC if the B end recognizes that the transparent CODEC is not being used.

9. Method according to Claim 1,
**characterized**
**in that** if the A end is situated in a µ-law network and the B end is situated in a µ-law network, the B end is offered preferably the transparent CODEC and as second choice p law and as third choice A law, whereupon the B end confirms the µ-law CODEC if the B end recognizes that the transparent CODEC is not being used.

10. Method according to Claim 1,
**characterized**
**in that** if the A end is situated in a µ-law network and the B end is situated in an A-law network, the B end is offered preferably the transparent CODEC and as second choice µ law and as third choice A law, whereupon the B end confirms the A-law CODEC if the B end recognizes that the transparent CODEC is not being used.

## Revendications

1. Procédé pour échanger des informations utiles générées selon différentes lois de codage entre au moins 2 terminaux d'abonnés, dans lequel un côté A est défini selon la première loi de codage et un côté B selon la seconde loi de codage, les informations utiles étant acheminées avec une première largeur de bande, une communication 64 kBit/s unrestricted preferred, au moyen d'une pluralité de dispositifs de transmission (MG A, MG B), qui présentent la fonction d'une interface entre un premier réseau de transmission (TDM) et un second réseau de transmission (ATM, IP), et qui sont commandés par des dispositifs de commande (CSF A, CSF B) respectivement attribués, qui traitent des informations de signalisation attribuées aux informations utiles, qu'ils échangent au moyen d'un protocole de signalisation présentant une CODEC Negotiation et une Modification Procedure,
**caractérisé en ce que**
il est prévu dans la CODEC Modification Procedure une autre logique au moyen de laquelle, lorsqu'on commute sur une seconde largeur de bande dans le cas où la communication n'aboutit pas avec une première largeur de bande, et dans le cas d'un Fallback sur une communication avec une largeur de bande inférieure, les informations utiles à échanger sont converties dans la loi de codage du terminal d'abonné récepteur.

2. Procédé selon la revendication 1,
**caractérisé en ce que**,
dans le cas où le côté A est situé dans un réseau A-Law, on propose au côté B comme préférence un CODEC transparent et comme second choix uniquement des informations utiles codées A-Law, après quoi le côté B confirme d'abord le CODEC transparent.

3. Procédé selon les revendications 1 à 2,
**caractérisé en ce que**,
dans le cas où le côté A est situé dans un réseau A-Law, le côté B demande le A-Law CODEC auprès du Fallback.

4. Procédé selon les revendications 1 à 3, **caractérisé en ce que**,
dans le cas où le côté A est situé dans un réseau µ-Law et le côté B dans un réseau µ-Law, on propose au côté B comme préférence le CODEC transparent et comme second choix µ-Law et comme troisième choix A-Law, après quoi le côté B confirme d'abord le CODEC transparent.

5. Procédé selon les revendications 1 à 4,
**caractérisé en ce que**,
dans le cas où le côté A est situé dans un réseau µ-Law et le côté B dans un réseau µ-Law, le côté B demande le "µ-Law" CODEC lors du Fallback.

6. Procédé selon les revendications 1 à 5,
**caractérisé en ce que**,
dans le cas où le côté A est situé dans un réseau µ-Law et le côté B dans un réseau A-Law, on propose au côté B comme préférence le CODEC transparent et comme second choix µ-Law et comme troisième choix A-Law, après quoi le côté B confirme d'abord le CODEC transparent.

7. Procédé selon les revendications 1 à 6,
**caractérisé en ce que**,
dans le cas où le côté A est situé dans un réseau µ-Law et le côté B dans un réseau A-Law, le côté B demande alors le "A-Law" CODEC lors du Fallback.

8. Procédé selon la revendication 1,
**caractérisé en ce que**,
dans le cas où le côté A est situé dans un réseau A-Law, on propose au côté B comme préférence un CODEC transparent et comme second choix uniquement des informations utiles codées A-Law, après quoi le côté B confirme le A-Law CODEC dans le cas où le côté B reconnaît que le CODEC transparent n'est pas utilisé.

9. Procédé selon la revendication 1,
**caractérisé en ce que**,
dans le cas où le côté A est situé dans un réseau µ-Law et le côté B dans un réseau µ-Law, on propose au côté B comme préférence le CODEC transparent et comme second choix µ-Law et comme troisième choix A-Law, après quoi le côté B confirme le µ-Law CODEC si le côté B reconnaît que le CODEC transparent n'est pas utilisé.

10. Procédé selon la revendication 1,
**caractérisé en ce que**,
si le côté A est situé dans un réseau µ-Law et le côté B dans un réseau A-Law, on propose au côté B comme préférence le CODEC transparent et comme second choix µ-Law et comme troisième choix A-Law, après quoi le côté B confirme le A-Law CODEC, si le côté B reconnaît que le CODEC transparent n'est pas utilisé.
